# EUROPEAN PATENT SPECIFICATION

(11) **EP 3 593 630 B1**
(45) Date of publication and mention of the grant of the patent: **16.06.2021**
(21) Application number: 18182687.6
(22) Date of filing: 10.07.2018
(51) Int. Cl.: A01G 3/053

(54) **HEDGE TRIMMER**
HECKENSCHERE
TAILLE-HAIE

(43) Date of publication of application: 15.01.2020
(73) Proprietor: TTI (Macao Commercial Offshore) Limited, Macao (MO)
(72) Inventor: LAM, Chin Hung, Kwai Chung, New Territories (HK)
(74) Representative: Grünecker Patent- und Rechtsanwälte PartG mbB

(56) References cited:
- EP-A1- 2 525 646
- US-A- 3 959 878
- US-B1- 6 415 515

## Description

### FIELD OF INVENTION

This invention relates to power tools, in particular outdoor gardening tools and more particularly hedge trimmers used for trimming branches and leaves of a hedge or others in which a cutting blade is reciprocated by a motor.

### BACKGROUND OF INVENTION

A hedge trimmer is one type of outdoor gardening tool which is used to cut off branches and leaves in, for example, desirably shaping a hedge or others by an elongated blade arrangement which linearly reciprocates. This cutting or trimming work is usually performed so that a worker holds the hedge trimmer with both hands and moves the cutter bars along the shape of the hedge. Movement of the blade arrangement in a reciprocating manner can result in significant loss of energy due to friction. Hedge trimmers with improved efficiency are desired. Document US 6,415,515 B1 describes a power cutting tool with two moveable blade having apertures aligned with each other and a spacer that passes freely through these apertures. The spacer having a flange element extending on top of the upper blade elements and is fixed to a blade support member beneath the lower blade element. Another improved hedge trimmer is known from EP2525646 B1, wherein the bladed are spaced by embossments on one of the blades which slide on surface of the other respective blade.

### SUMMARY OF INVENTION

In the light of the foregoing background, it is an object of the present invention to provide an alternate hedge trimmer which eliminates or at least alleviates the above technical problems.

The above object is met by the combination of features of the independent claims. The dependent claims disclose further advantageous embodiments of the invention.

One skilled in the art will derive from the following description other objects of the present disclosure.

Therefore, the foregoing statements of object are not exhaustive and serve merely to illustrate some of the many objects of the present invention.

Accordingly, the present invention relates to a hedge trimmer, comprising: a drive motor disposed in a casing and a blade arrangement having at least two upper and lower cutter bars. At least one of the upper and lower cutter bars is driven in a reciprocating manner in a longitudinal direction of the blade arrangement by the drive motor. The upper and lower cutter bars are spaced apart from each other by a gap thereby reducing the friction therebetween.

According to the invention, the upper and lower bars are separated by a protruding member sandwiched therebetween.

In one variation, at least one of the upper and lower cutter bars receives a portion of the protruding member.

According to the invention, at least one of the upper and lower cutter bars includes an opening or a recess into which the protruding member is received.

According to the invention, the upper cutter bar may include an opening or a recess into which the protruding member is received. The protruding member being protruded from the upper cutter bar protrudes towards and engages the lower cutter bar.

According to the invention, the lower cutter bar may include an opening or a recess into which the protruding member is received. The protruding member being protruded from the lower cutter bar protrudes towards and engages the upper cutter bar.

In one implementation, a plurality of protruding members is provided at discrete positions along the longitudinal direction of at least one of the upper and lower cutter bars.

Preferably, the protruding member is made of high wear resisting materials.

More preferably, the protruding member is made of ceramic materials.

In one variation, the hedge trimmer further comprises coupling means adapted to limit the movement of the upper and lower cutter bars in a direction transverse to the longitudinal direction of the blade arrangement.

In another variation, the hedge trimmer further comprises a supporting member on one side of at least one of the upper and lower cutter bars opposite to the other of the upper and lower cutter bars for supporting the one of the upper and lower cutter bars.

Preferably, the upper and lower cutter bars are each driven in a reciprocating manner in an opposite direction.

In one implementation, the gap between the upper and lower cutter bars is in a range of 0.01 mm to 0.3 mm, preferably 0.05 mm.

The present invention, in another aspect, is a method of fabricating a blade arrangement for use in a power tool, comprising the steps of: (a) fabricating a first cutter bar from a first material; (b) fabricating a second cutter bar from the aforesaid first material; and (c) stacking the first cutter bar onto the second cutter bar, wherein the first and second cutter bars are spaced apart from each other by a gap thereby reducing the friction therebetween during reciprocating motions of the blade arrangement.

According to the invention, the method further includes step (b1), following step (b), of positioning a protruding member made of a second material between the first cutter var and the second cutter bar.

Preferably, the second material has a higher wear resistance than the first material.

According to the invention, step (b1) further includes step (b2) of extruding an opening or a recess from at least one of the first cutter bar and the second cutter bar.

According to the invention, step (b1) includes step (b3), following step (b2), of inserting the protruding member into the opening or recess on the extruded cutter bar.

According to the invention, step (c) includes step (c1) of protruding the protruding member received on one cutter bar towards the other cutter bar and engaging the other cutter bar.

In one variation, the method described may also include step (d) following step (c) of coupling the first and second cutter bars to limit the movement of the first and second cutter bars in a direction transverse to the longitudinal direction of the blade arrangement.

The hedge trimmer according to the present invention is more efficient and able to maximize power for operation of the hedge trimmer, i.e. cutting or trimming. The hedge trimmer equipped with a gap or space between the upper and lower cutters bars can reduce friction between the upper and lower cutter bars, thereby saving energy that may be lost as heat and maximizing power for operation of the hedge trimmer. Reduction in friction between the cutter bars, while increasing the efficiency of the hedge trimmer, may also increase long term use of the hedge trimmer by reducing mechanical wear.

### BRIEF DESCRIPTION OF FIGURES

The foregoing and further features of the present invention will be apparent from the following description of preferred embodiments which are provided by way of example only in connection with the accompanying figures, of which:
Fig. 1 is a front perspective view of the overall appearance of a hedge trimmer in accordance with one example embodiment.
Fig. 2 is a cross-sectional view of the hedge trimmer in Fig. 1 in accordance with one example embodiment.
Fig. 3 is a cross-sectional view of the blade arrangement of the hedge trimmer in Fig. 1 in accordance with an example embodiment.
Fig. 4 is a cross-sectional view of the blade arrangement of the hedge trimmer in Fig. 1 in accordance with an example embodiment.
Fig. 5 is a side view of the blade arrangement of the hedge trimmer in Fig.1 in accordance with an example embodiment.
Fig. 6 is a cross-sectional view of the blade arrangement of the hedge trimmer in Fig. 1 in accordance with an example embodiment.
Fig. 7A is a top view of an upper cutter bar in the blade arrangement of the hedge trimmer in Fig. 1 in accordance with an example embodiment.
Fig. 7B shows a top view of an upper cutter bar in the blade arrangement of the hedge trimmer in Fig. 1 in accordance with an example embodiment.
Fig. 7C shows a top view of an upper cutter bar in the blade arrangement of a hedge trimmer in accordance with an alternative example embodiment.
Fig. 7D shows a top view of a lower cutter bar in the blade arrangement of the hedge trimmer in Fig. 1 in accordance with an example embodiment.
Fig. 8A is a top view of a lower cutter bar in the blade arrangement of the hedge trimmer in Fig. 1 in accordance with an example embodiment.
Fig. 8B shows a top view of a lower cutter bar in the blade arrangement of the hedge trimmer in Fig. 1 in accordance with an example embodiment.
Fig. 8C shows a top view of a lower cutter bar in the blade arrangement of a hedge trimmer in accordance with an alternative example embodiment.
Fig. 8D shows a top view of an upper cutter bar in the blade arrangement of the hedge trimmer in Fig. 1 in accordance with an example embodiment.
Fig. 9 is a flow diagram of a method of fabricating the blade arrangement in Figs. 3-4 in accordance with an example embodiment.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments.

Terms such as "horizontal", "vertical", "upwards", "downwards", "above", "below" and similar terms as used herein are for the purpose of describing various embodiments in their normal in-use orientation and are not intended to limit the disclosure to any particular orientation.

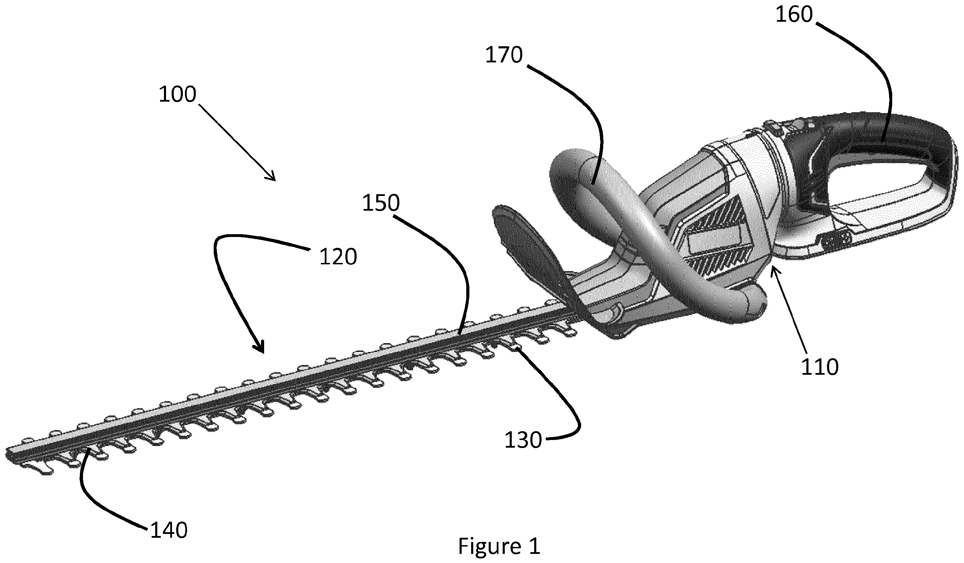

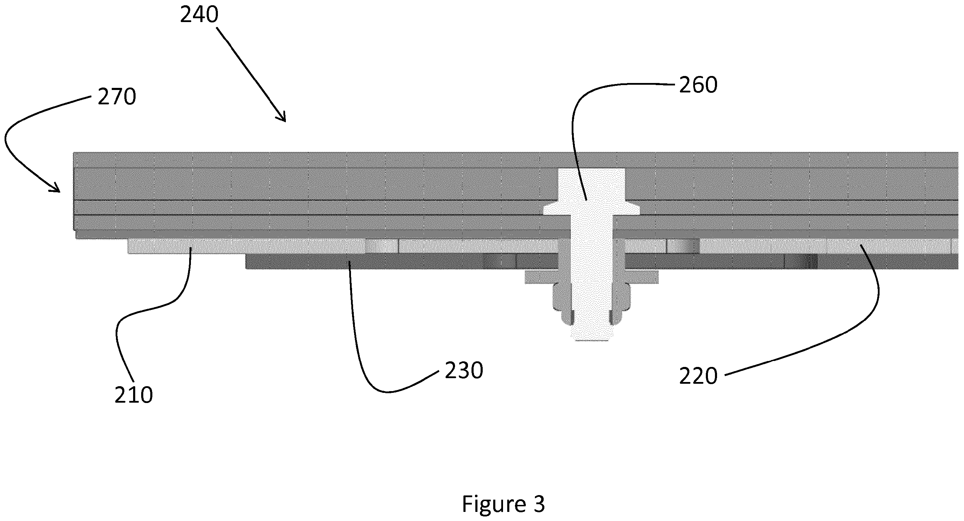

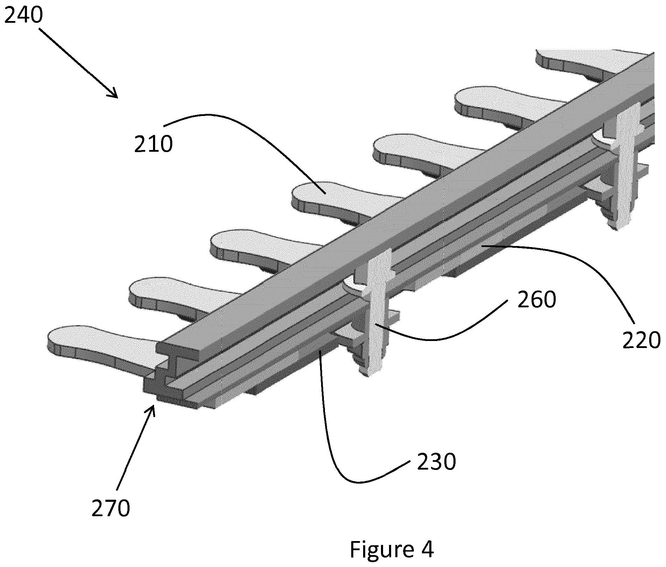

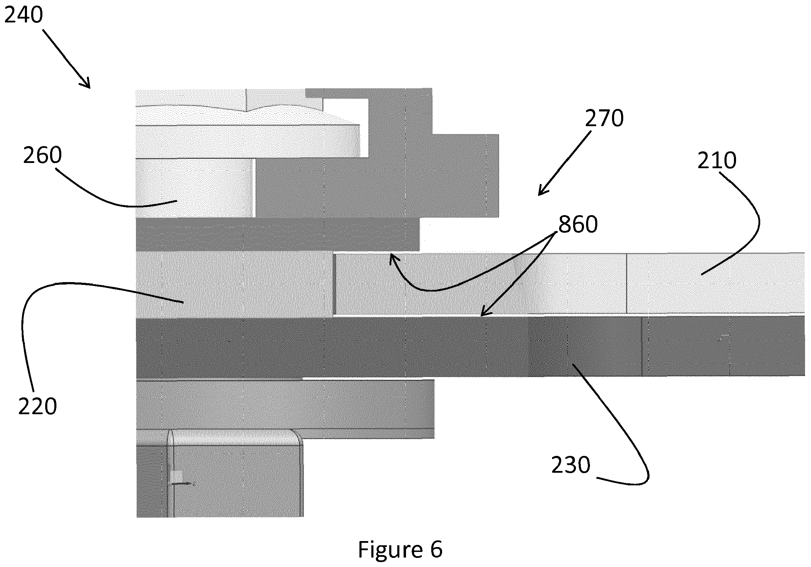

With reference to Figures 1 to 8D, example embodiments provide a hedge trimmer that includes a drive motor disposed in a casing and a blade arrangement having at least two, upper and lower cutter bars. At least one of the upper and lower cutter bars is driven in a reciprocating manner in a longitudinal direction of the blade arrangement by the drive motor. The upper and lower cutter bars are spaced apart from each other by a gap thereby reducing the friction between the upper and lower cutter bars, thereby saving energy and maximizing the power and overall efficiency of the hedge trimmer.

Referring initially to Figure 1, the first example embodiment is a power tool 100 e.g. hedge trimmer 100 with a friction reduction mechanism. The hedge trimmer 100 includes a drive motor and a gear mechanism disposed in a casing 110 and a blade arrangement 120 extending out from the casing 110 having at least two upper 140 and lower 130 cutter bars. The gear mechanism converts and delivers the driving force outputted by the drive motor to the at least two upper 140 and lower 130 cutter bars.

In an example embodiment, the drive motor and gear mechanism may drive at least one of the two upper 140 and lower 130 cutter bars while the other cutter bar that is opposite to the driven cutter bar remains stationary. For instance, the upper cuter bar 140 may be driven in a reciprocating manner in a longitudinal direction of the blade arrangement 120 while the lower cutter bar 130 remains stationary, and vice versa. Advantageously, in this configuration, the two cutter bars 140, 130 are movable relative to each other whilst the gear mechanism of the power tool 100 may be simplified. Thus, the overall weight of the power tool 100 may be reduced significantly.

In a further example embodiment, the blade arrangement 120 may further include a supporting member 150. In a further example embodiment, the supporting member 150 is on one side of at least one of the upper 140 and lower 130 cutter bars opposite to the other of the upper 140 and lower 130 cutter bars for supporting one of the upper 140 and lower 130 cutter bars.

The upper 140 and lower 130 reciprocating blades are operatively connected to the drive motor and driven in a longitudinal direction of the blade arrangement 120. The upper 140 and lower 130 cutter bars are each driven in a reciprocating manner in an opposite direction such that they move back and forth linearly.

In an example embodiment, the cutter bars 130,140 are made typically of metal in the form of a plurality of cutting blades or teeth. The cutting blades are spaced from one another to allow the entry of branches, leaves and debris to be cut by the upper 140 and lower 130 cutter bars.

In an example embodiment, the spacing between the teeth on the cutter bars 140, 130 allows branches, leaves and debris to be cut by the cutter bars 140, 130 through a shearing action. The spacing between the cutting blades and the size and shape of the cutting blades may vary to suit various requirements, and the cutting blades may be single-sided or double-sided.

In an example embodiment, the blade arrangement 120 may further include a saw blade assembly for cutting larger branches or debris. In a further example embodiment, the saw blade assembly may be secured to the distal end of the blade arrangement. The hedge trimmer 100 may also include a plastic or metal catcher plate that may be attached along the length of the blade arrangement 120 to promptly and easily sweep away cuttings or trimmings.

In an example embodiment, the casing 110 may include two handles, a front handle 170 and a rear handle 160 for a user to hold and operate the hedge trimmer 100 in a convenient and safe manner, as skilled persons would appreciate. In a further example embodiment, the rear handle 160 may be a rotating handle that allows the user to maintain the same grip when trimming vertically or horizontally. In an example embodiment, the hedge trimmer 100 may include a trigger on the rear handle 160 for the user to activate the drive motor on a real-time basis such that the motor only rotates when activated by the user continuously pressing the trigger.

In another example embodiment, the hedge trimmer 100 may include a 'lock on' feature that allows the user to activate the motor continuously without having to depress the trigger. In a further example embodiment, a removable battery pack may be attached to the hedge trimmer 100 at the top of the casing 110. The hedge trimmer 100 may also include a shroud in front of the casing 110 to provide protection to the user during trimming or cutting operation.

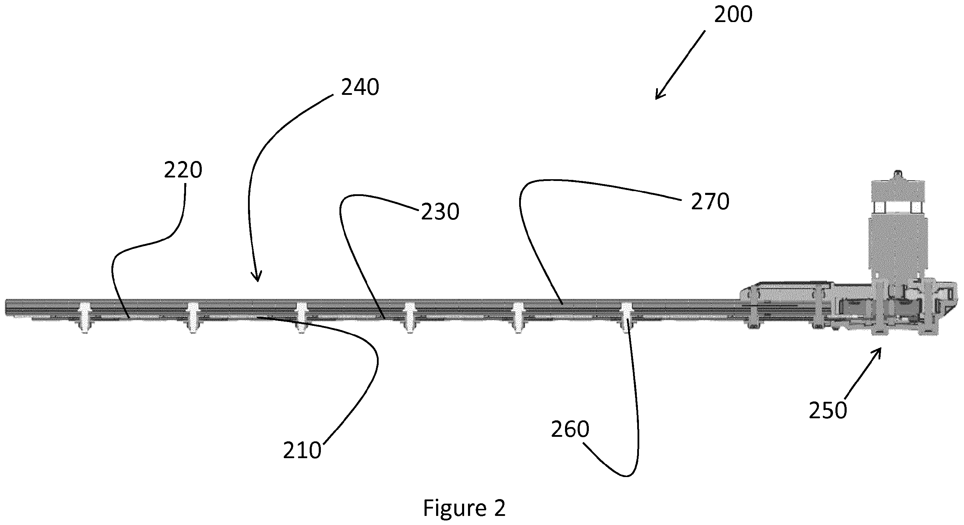

With reference to Figures 2 to 4, the hedge trimmer 200 has a blade arrangement 240 having at least two, upper 210 and lower 230 cutter bars wherein the upper 210 and lower 230 cutter bars are each driven in a reciprocating manner in a longitudinal direction of the blade arrangement 240 by the drive motor 250 as described previously.

In an example embodiment, the hedge trimmer 200 further includes coupling means 260 disposed on the blade arrangement 240 adapted to limit the movement of the at least two upper 210 and lower 230 cutter bars in a direction transverse to the longitudinal direction of the blade arrangement 240. In an example embodiment, the coupling means 260 may be evenly spaced or intermittently spaced along a longitudinal direction of the blade arrangement 240. However, friction between the upper 210 and lower 230 cutter bars or moving blades can result in significant loss of energy during operation of the hedge trimmer 200.

In a preferred embodiment, the upper 210 and lower 230 cutter bars are separated by a protruding member 220 sandwiched therebetween. The protruding member 220 acts as a barrier between the upper 210 and lower 230 cutter bars and a gap or spacing is formed between the upper 210 and lower 230 cutter bars.

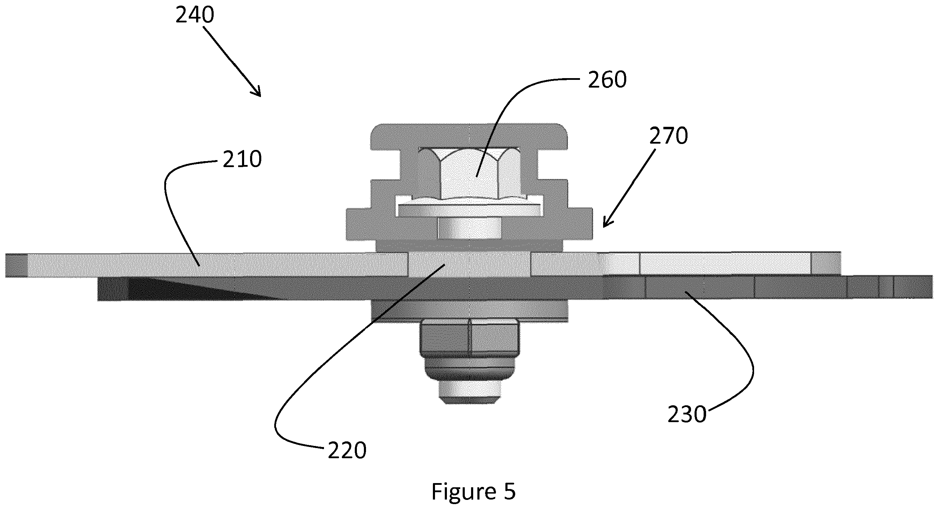

Figures 5-6 show magnified views of the blade arrangement 240 where the protruding member 220 separates the upper cutter bar 210 and the lower cutter bar 230 by a gap 860. Gaps 860 reduce the surface contact area between the cutter bars 210, 230 and friction therebetween. The reduction in friction helps reduce energy loss and maximizes power for operation of the hedge trimmer 200.

In an example embodiment, the addition of coupling means 260 and supporting member 270 provide structural support to the blade arrangement 240. In a further example embodiment, the supporting member 270 may include a supporting bracket for additional support.

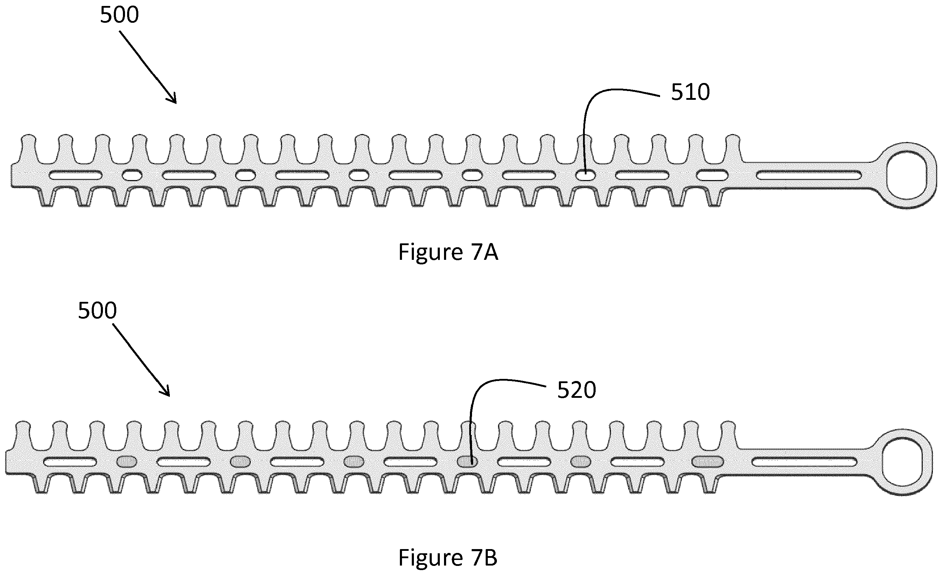

With reference to Figures 7A to 8D, at least one of the upper and lower cutter bars 500, 600 receives a portion of the protruding member 520, 620. In an example embodiment, the protruding member 520, 620 may be disposed on the surface of one of the upper and lower 500, 600 cutter bars. In another example embodiment, the upper and lower 500, 600 cutter bars may include an opening or recess 510, 610 into which the protruding member 520, 620 is received.

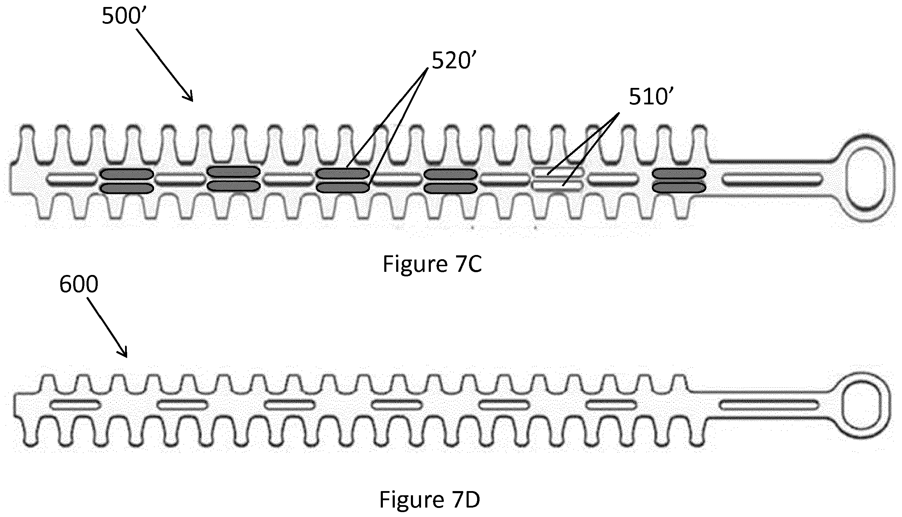

In one example embodiment, the upper cutter bar 500 illustrated in Figs 7A to 7B or upper cutter bar 500' illustrated in Fig 7C includes one or more recesses 510, 510' into which a plurality of protruding members 520, 520' is received. Each of the protruding members 520, 520' being protruded from the upper cutter bar 500, 500' protrudes further towards, and engages, the lower cutter bar 600 as illustrated in Fig 7D.

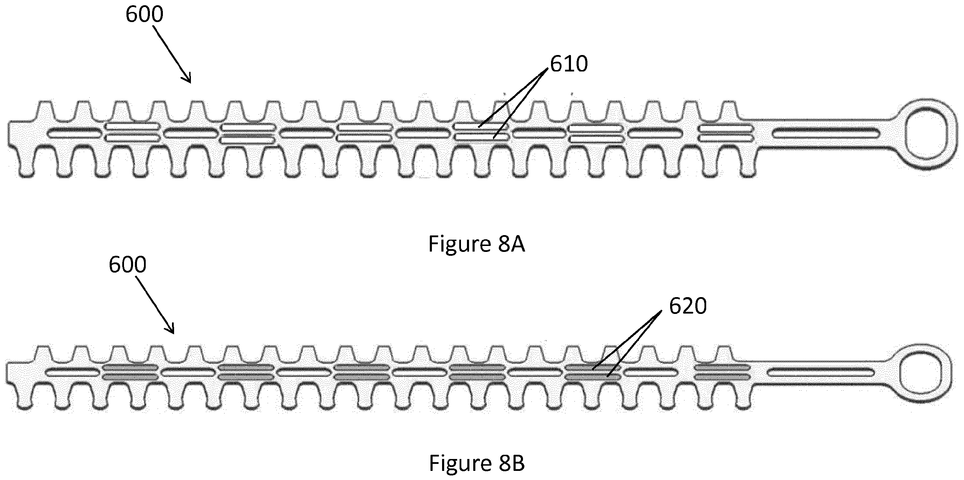

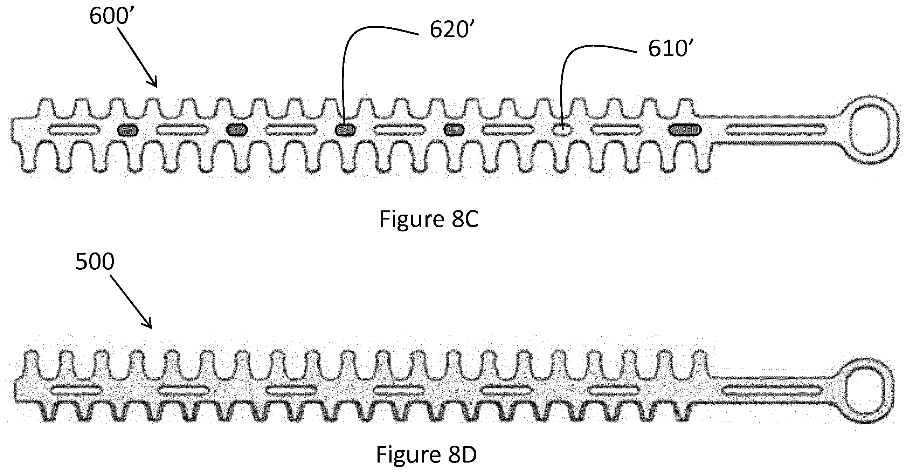

In another example embodiment, the lower cutter bar 600 illustrated in Figs 8A to 8B and lower cutter bar 600' illustrated in Fig 8C includes one or more openings 610, 610' into which a plurality of protruding members 620, 620' is received. Each of the protruding members 620, 620' being protruded from the lower cutter bar 600, 600' protrudes further towards, and engages, the upper cutter bar 500 as illustrated in Fig 8D.

In accordance with an example embodiment, if one of the upper and lower cutter bars 500, 500', 600, 600' has an opening or recess 510, 510', 610, 610', the opposite cutter bar 500, 500' or 600, 600' does not have an opening or recess such that the protruding member 520, 520', 620, 620' provided on one cutter bar 500, 500', 600, 600' act against the surface of the opposite cutter bar 500, 500', 600, 600' at all times. This prevents the protruding member 520, 520', 620, 620' from falling out of the blade arrangement 240.

For example, in the blade arrangement of Figs 7A to 7D, the upper cutter bar 500, 500' has an opening or recess 510, 510' into which the protruding member 520, 520' is received. The lower cutter bar 600 does not have any openings or recesses where the protruding member 520, 520' may otherwise be received therein and subsequently fall out of the blade arrangement via such openings or recesses.

In a similar manner, in the blade arrangement of Figs 8A to 8D, the lower cutter bar 600, 600' has an opening or recess 610, 610' into which the protruding member 620, 620' is received. The upper cutter bar 500 does not have any openings or recesses where the protruding member 620, 620' may otherwise be received therein and subsequently fall out of the blade arrangement via such openings or recesses.

In a preferred embodiment, a plurality of protruding members 520, 620 are provided at discrete positions along the longitudinal direction of at least one of the upper and lower cutter bars 500, 600. The protruding members 520, 620 may be provided at regular or irregular intervals along the longitudinal direction of the at least one upper and lower cutter bars 500, 600.

In an example embodiment, the protruding member 520, 620 is made of high wear resisting materials. In a preferred example embodiment, the protruding member is made of ceramic materials. In a further example embodiment, the gap 860 between the upper 210 and lower 230 cutter bar is 0.05mm.

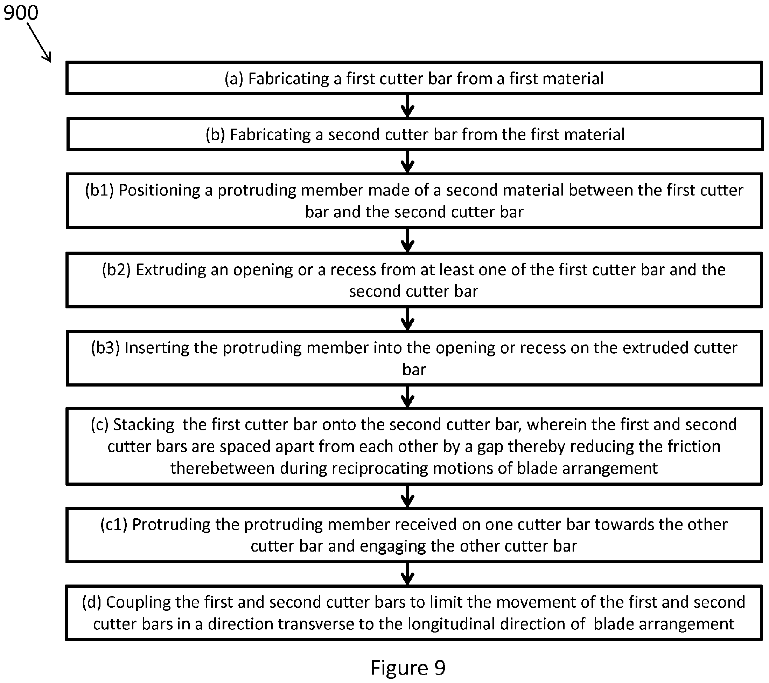

With reference finally to Figure 9, the flow diagram 900 provides an example embodiment of a method of fabricating a blade arrangement as described above for use in a power tool. The method may include three steps, including fabricating a first cutter bar from a first material (step a); fabricating a second cutter bar from the aforesaid first material (step b); and stacking the first cutter bar onto the second cutter bar, wherein the first and second cutter bars are spaced apart from each other by a gap thereby reducing the friction therebetween during reciprocating motions of the blade arrangement (step c).

A preferred embodiment includes a further step (b1) following step (b) of positioning a protruding member made of a second material between the first cutter bar and the second cutter bar. By way of example, the second material is a high wear resisting material with a higher wear resistance than the first material, preferably ceramic materials.

According to an example embodiment, at least one of the first cutter bar and second cutter bar may receive a portion of the protruding member.

In step (b1), the protruding member may be positioned at a singular position or at a plurality of regularly or irregularly spaced positions along a longitudinal direction between the first cutter bar and the second cutter bar.

Preferably, step (b1) of positioning the protruding member between the first cutter bar and the second cutter bar may be achieved by step (b2) of extruding an opening or a recess from at least one of the first cutter bar and second cutter bar, followed by further step (b3) of inserting the protruding member into the opening or recess on the extruded cutter bar. Optionally, this may be a singular opening or a plurality of openings.

In an alternate example embodiment, the protruding member may be positioned on and attached to the surface of at least one of the first cutter bar and the second cutter bar such that the protruding member is sandwiched between the first cutter bar and second cutter bar.

Step (c) may further include step (c1) of protruding the protruding member received on one cutter bar towards the other cutter bar and engaging the other cutter bar. For example, protruding the protruding member received on the first cutter bar towards the second cutter bar and engaging the second cutter bar.

In an example embodiment, the first and second cutter bars may be spaced apart from each other by a gap within a range of 0.01 millimeters (mm) to 0.3 mm. In a preferred embodiment, the gap is 0.05 mm.

A preferred embodiment includes step (c) followed by step (d) of coupling the first and second cutter bars to limit the movement of the first and second cutter bars in a direction transverse to the longitudinal direction of the blade arrangement.

Advantageously, step (d) couples or links the first and second cutter bars in the blade arrangement and seeks to ensure that the first and second cutter bars move in a longitudinal direction of the blade arrangement. This presents vigorous vibration of the cutter bars during the trimming operation.

The exemplary embodiments of the present disclosure are thus fully described. Although the description referred to particular embodiments, it will be clear to one skilled in the art that the present disclosure may be practiced with variation of these specific details. Hence this disclosure should not be construed as limited to the embodiments set forth herein.

While embodiments of this disclosure have been illustrated and described in detail in the drawings and foregoing description, the same is to be considered as illustrative and not restrictive in character, it being understood that only exemplary embodiments have been shown and described. It can be appreciated that any of the features described herein may be used with any embodiment. The illustrative embodiments are not exclusive of each other or of other embodiments not recited herein. The scope of the invention is defined by the appended claims.

On the other hand, in the embodiments described above, the cutter bars of the hedge trimmer are described to be both driven by the drive motor. That is, both cutter bars can move in opposite directions to facilitate the trimming operation. However, in other possible variations of the embodiments it may also be the case where only one cutter bar is driven by the drive motor, i.e. an active cutter bar, while the other cutter bar is fixed and not able to move, i.e. a passive cutter bar.

Skilled persons will appreciate that other types of protection means rather than the above two may also be used in the hedge trimmers. The scope of the invention is defined by the appended claims.

## Claims

1. A hedge trimmer (100), comprising:
a drive motor disposed in a casing;
a blade arrangement (120) having at least two, upper and lower cutter bars (140, 130), wherein at least one of the upper and lower cutter bars (140, 130) is driven in a reciprocating manner in a longitudinal direction of the blade arrangement (120) by the drive motor;
wherein the upper and lower cutter bars (140, 130) are spaced apart from each other by a gap (860) thereby reducing the friction therebetween, and the upper and lower cutter bars (140, 130) are separated by a protruding member (220) sandwiched therebetween;
**characterized in that** the upper cutter bar (140) includes an opening or a recess into which the protruding member (220) is received, the protruding member (220) being protruded from the upper cutter bar (140) towards and engages the lower cutter bar (130); or wherein the lower cutter bar (130) includes an opening or a recess into which the protruding member (220) is received, the protruding member (220) being protruded from the lower cutter bar (130) towards and engages the upper cutter bar (140).

2. The hedge trimmer (100) according to claim 1,
wherein a plurality of aforesaid protruding members (220) is provided at discrete positions along the longitudinal direction of at least one of the upper and lower cutter bars (140, 130).

3. The hedge trimmer (100) according to any preceding claim,
wherein the protruding member (220) is made of high wear resisting materials.

4. The hedge trimmer (100) according to any preceding claim,
wherein the protruding member (220) is made of ceramic materials.

5. The hedge trimmer (100) according to any preceding claim,
further including coupling means adapted to limit the movement of the upper and lower cutter bars (140, 130) in a direction transverse to the longitudinal direction of the blade arrangement (120).

6. The hedge trimmer (100) according to any preceding claim,
further including a supporting member (270) on one side of at least one of the upper and lower cutter bars (140, 130) opposite to the other of the upper and lower cutter bars (140, 130) for supporting the one of the upper and lower cutter bars (140, 130).

7. The hedge trimmer (100) according to any preceding claim,
wherein the upper and lower cutter bars (140, 130) are each driven in a reciprocating manner in an opposite direction.

8. The hedge trimmer (100) according to any preceding claim,
wherein the gap (860) between the upper and lower cutter bars (140, 130) is in a range of 0.01 mm to 0.3 mm, preferably 0.05 mm.

9. A method of fabricating a blade arrangement (120) for use in a power tool, comprising:
(a) fabricating a first cutter bar from a first material;
(b) fabricating a second cutter bar from the aforesaid first material;
(b1) positioning a protruding member (220) made of a second material between the first
(b2) extruding an opening or a recess from at least one of the first cutting rod and the second cutter bar;
(b3) inserting the protruding member (220) into the opening or recess on the extruded cutter bar;
(c) stacking the first cutter bar onto the second cutter bar, wherein the first and second cutter bars are spaced apart from each other by a gap (860) thereby reducing the friction therebetween during reciprocating motions of the blade arrangement (120);
(c1) protruding the protruding member (220) received on one cutter bar towards the other cutter bar and engaging with the other cutter bar.

10. The method of claim 9, wherein the second material has higher wear resistance than the first material.

11. The method according to any one of claims 9 to 10, further including, following (c), (d) coupling the first cutter bars to limit the movement of the first and second cutter bars in a direction transverse to the longitudinal direction of the blade arrangement (120).

## Patentansprüche

1. Eine Heckenschere (100), umfassend:
einen in einem Gehäuse angeordneten Antriebsmotor;
eine Messeranordnung (120) mit mindestens zwei, oberen und unteren Schneidleisten (140, 130), wobei mindestens eine der oberen und unteren Schneidleisten (140, 130) in einer Längsrichtung der Messeranordnung (120) durch den Antriebsmotor hin- und hergehend angetrieben wird;
wobei die oberen und unteren Schneidleisten (140, 130) durch einen Spalt (860) voneinander beabstandet sind, wodurch die Reibung dazwischen verringert wird, und wobei die oberen und unteren Schneidleisten (140, 130) durch ein dazwischenliegendes, vorstehendes Element (220) getrennt sind;
**dadurch gekennzeichnet, dass** die obere Schneidleiste (140) eine Öffnung oder eine Ausnehmung aufweist, in der das vorstehende Element (220) aufgenommen ist, wobei das vorstehende Element (220) von der oberen Schneidleiste (140) in Richtung der unteren Schneidleiste (130) vorsteht und mit dieser in Eingriff steht; oder wobei die untere Schneidleiste (130) eine Öffnung oder eine Ausnehmung aufweist, in der das vorstehende Element (220) aufgenommen ist, wobei das vorstehende Element (220) von der unteren Schneidleiste (130) in Richtung der oberen Schneidleiste (140) vorsteht und mit dieser in Eingriff steht.

2. Die Heckenschere (100) nach Anspruch 1,
wobei eine Vielzahl der vorgenannten vorstehenden Elemente (220) an verschiedenen Positionen entlang der Längsrichtung von mindestens einer der oberen und unteren Schneidleisten (140, 130) vorgesehen ist.

3. Die Heckenschere (100) nach einem der vorhergehenden Ansprüche,
wobei das vorstehende Element (220) aus hoch verschleißfesten Material hergestellt ist.

4. Die Heckenschere (100) nach einem der vorangehenden Ansprüche,
wobei das vorstehende Element (220) aus keramischen Material hergestellt ist.

5. Die Heckenschere (100) nach einem der vorhergehenden Ansprüche,
wobei die Heckenschere (100) ferner eine Verbindungseinrichtung aufweist, die geeignet ist, die Bewegung der oberen und unteren Schneidleisten (140, 130) in einer Richtung quer zu der Längsrichtung der Messeranordnung (120) zu begrenzen.

6. Die Heckenschere (100) nach einem der vorhergehenden Ansprüche,
weiter mit einem Abstützelement (270) auf einer Seite der mindestens einen oberen und unteren Schneidleisten (140, 130) angeordnet ist gegenüber der anderen der oberen und unteren Schneidleisten (140, 130) um die eine der beiden oberen und unteren Schneidleisten (140, 130) zu unterstützen.

7. Die Heckenschere (100) nach einem der vorhergehenden Ansprüche,
wobei die oberen und unteren Schneidleisten (140, 130) jeweils in entgegengesetzter Richtung hin- und hergehend angetrieben sind.

8. Die Heckenschere (100) nach einem der vorhergehenden Ansprüche,
wobei der Spalt (860) zwischen der oberen und der unteren Schneidleiste (140, 130) in einem Bereich von 0,01 mm bis 0,3 mm, vorzugsweise bei 0,05 mm, liegt.

9. Ein Verfahren zum Herstellen einer Messeranordnung (120) zur Verwendung in einem Elektrowerkzeug, umfassend:
(a) Herstellen einer ersten Schneidleiste aus einem ersten Material;
(b) Herstellen eines zweiten Schneidleiste aus dem vorgenannten ersten Material;
(b1) Positionieren eines vorstehenden Elements (220), das aus einem zweiten Material hergestellt ist, zwischen dem ersten
(b2) Extrudieren einer Öffnung oder einer Aussparung aus mindestens einer von der ersten Schneidleiste und der zweiten Schneidleiste;
(b3) Einsetzen des vorstehenden Elements (220) in die Öffnung oder Ausnehmung an der extrudierten Schneidleiste;
(c) Aufsetzen der ersten Schneidleiste auf die zweite Schneidleiste, wobei die erste und die zweite Schneidleiste durch einen Spalt (860) voneinander beabstandet sind, wodurch die Reibung dazwischen während der hin- und hergehenden Bewegung der Messeranordnung (120) verringert wird;
(c1) Vorschieben des vorstehenden Elements (220), das an einer der Schneidleisten aufgenommen ist, in Richtung der anderen Schneidleiste und Eingreifen in die andere Schneidleiste.

10. Das Verfahren nach Anspruch 9, wobei das zweite Material eine höhere Verschleißfestigkeit aufweist als das erste Material.

11. Das Verfahren nach einem der Ansprüche 9 bis 10, das ferner nach (c), (d) das Verbinden der ersten Schneidleisten umfasst, um die Bewegung der ersten und zweiten Schneidleisten in einer Richtung quer zur Längsrichtung der Messeranordnung (120) zu begrenzen.

## Revendications

1. Taille-haie (100), comprenant :
un moteur d'entraînement disposé dans un boîtier ;
un agencement de lames (120) ayant au moins deux, barres de coupe supérieure et inférieure (140, 130), au moins l'une des barres de coupe supérieure et inférieure (140, 130) étant entraînée d'une manière en va-et-vient dans un sens longitudinal de l'agencement de lames (120) par le moteur d'entraînement ;
les barres de coupe supérieure et inférieure (140, 130) étant espacées à l'écart l'une de l'autre d'un espace (860) réduisant ainsi le frottement entre elles, et les barres de coupe supérieure et inférieure (140, 130) étant séparées par un élément faisant saillie (220) pris en sandwich entre elles ;
**caractérisée en ce que** la barre de coupe supérieure (140) comprend une ouverture ou un renfoncement dans lequel l'élément faisant saillie (220) est reçu, l'élément faisant saillie (220) venant en saillie depuis la barre de coupe supérieure (140) vers et engageant la barre de coupe inférieure (130) ; ou la barre de coupe inférieure (130) comprenant une ouverture ou un renfoncement dans lequel l'élément faisant saillie (220) est reçu, l'élément faisant saillie (220) venant en saillie depuis la barre de coupe inférieure (130) vers et engageant la barre de coupe supérieure (140).

2. Taille-haie (100) selon la revendication 1,
une pluralité d'éléments faisant saillie précédents (220) étant disposée à des positions discrètes le long du sens longitudinal d'au moins l'une des barres de coupe supérieure et inférieure (140, 130).

3. Taille-haie (100) selon l'une quelconque des revendications précédentes,
l'élément faisant saillie (220) étant constitué de matériaux à haute résistance à l'usure.

4. Taille-haie (100) selon l'une quelconque des revendications précédentes,
l'élément faisant saillie (220) étant constitué de matériaux céramiques.

5. Taille-haie (100) selon l'une quelconque des revendications précédentes,
comprenant en outre un moyen d'accouplement adapté pour limiter le mouvement des barres de coupe supérieure et inférieure (140, 130) dans un sens transversal au sens longitudinal de l'agencement de lames (120).

6. Taille-haie (100) selon l'une quelconque des revendications précédentes,
comprenant en outre un élément de support (270) sur un côté d'au moins l'une des barres de coupe supérieure et inférieure (140, 130) opposé à l'autre des barres de coupe supérieure et inférieure (140, 130) pour supporter l'une des barres de coupe supérieure et inférieure (140, 130) .

7. Taille-haie (100) selon l'une quelconque des revendications précédentes,
les barres de coupe supérieure et inférieure (140, 130) étant chacune entraînées d'une manière en va-et-vient dans un sens opposé.

8. Taille-haie (100) selon l'une quelconque des revendications précédentes,
l'espace (860) entre les barres de coupe supérieure et inférieure (140, 130) se trouvant dans une plage de 0,01 mm à 0,3 mm, préférablement 0,05 mm.

9. Procédé de fabrication d'un agencement de lames (120) pour l'utilisation dans un outil électrique, comprenant :
(a) la fabrication d'une première barre de coupe à partir d'un premier matériau ;
(b) la fabrication d'une seconde barre de coupe à partir du premier matériau susmentionné ;
(b1) le positionnement d'un élément faisant saillie (220) constitué d'un second matériau entre la première
(b2) l'extrusion d'une ouverture ou d'un renfoncement à partir d'au moins l'une de la première tige de coupe et de la seconde barre de coupe ;
(b3) l'insertion de l'élément faisant saillie (220) dans l'ouverture ou le renfoncement sur la barre de coupe extrudée ;
(c) l'empilement de la première barre de coupe sur la seconde barre de coupe, la première et la seconde barre de coupe étant espacées l'une de l'autre d'un espace (860) réduisant ainsi le frottement entre elles durant les mouvements de va-et-vient de l'agencement de lames (120) ;
(c1) le fait de mettre en saillie l'élément faisant saillie (220) reçu sur une barre de coupe vers l'autre barre de coupe et venant en prise avec l'autre barre de coupe.

10. Procédé selon la revendication 9, le second matériau ayant une résistance élevée à l'usure par rapport au premier matériau.

11. Procédé selon l'une quelconque des revendications 9 à 10, comprenant en outre, les (c), (d) suivants accouplant les premières barres de coupe pour limiter le mouvement de la première et de la seconde barre de coupe dans un sens transversal au sens longitudinal de l'agencement de lames (120).
